# DEMANDE DE BREVET EUROPEEN

(11) **EP 1 760 862 A1**
(43) Date de publication de la demande: **07.03.2007**
(21) Numéro de dépôt: 06291359.5
(22) Date de dépôt: 25.08.2006
(51) Int. Cl.: H02K 9/06

(54) **Appareil électrique de traitement de produits alimentaires doté d'un dispositif de ventilation perfectionné**

(30) Priorité: 29.08.2005 FR 0508829
(71) Demandeur: Electrolux Professionnel, 60300 Senlis (FR)
(72) Inventeur: Lagier, Christophe, 23200 Aubusson (FR); Paturel, Bruno, 23200 Aubusson (FR)
(74) Mandataire: Domenego, Bertrand

(57) **Abrégé**

Cet appareil comporte
- un carter (3),
- un moteur électrique (7) agencé dans le carter (3), ayant un stator (27) et un rotor (21), doté d'un arbre d'entraînement (23) et prévu pour entraîner un organe de traitement de produits,
- un dispositif de ventilation prévu pour refroidir le moteur (7) lors de son fonctionnement, ledit dispositif comportant au moins une entrée (33) et une sortie (35) d'air dans le carter (3), ladite sortie d'air (35) étant agencée radialement par rapport à l'arbre (23), un ventilateur radial (39) solidaire de l'arbre (23), agencé pour faire circuler de l'air de l'entrée (33) vers la sortie (35) d'air au travers du moteur (7).

Le dispositif de ventilation comporte en outre un ventilateur axial (37) solidaire de l'arbre (23), agencé coaxialement en amont du ventilateur radial (37).

## Description

La présente invention concerne un appareil électrique de traitement de produits alimentaires, comportant
- un carter,
- un moteur électrique agencé dans le carter, ayant un stator et un rotor, doté d'un arbre d'entraînement et prévu pour entraîner un organe de traitement de produits,
- un dispositif de ventilation prévu pour refroidir le moteur lors de son fonctionnement, ledit dispositif comportant au moins une entrée et une sortie d'air dans le carter, ladite sortie d'air étant agencée radialement par rapport à l'arbre, un ventilateur radial solidaire de l'arbre, agencé pour faire circuler de l'air de l'entrée vers la sortie d'air au travers du moteur.

Plus particulièrement, l'invention concerne les appareils de type mixeur, et plus particulièrement encore ceux utilisés dans la préparation alimentaire pour la restauration collective, c'est-à-dire des appareils de grandes dimensions.

Dans les appareils connus de ce type, les entrées d'air sont formées dans le carter de façon radiale par rapport à l'arbre-moteur et à la direction générale de l'appareil. La mise en circulation de l'air de refroidissement est généralement assurée uniquement par un ventilateur radial agencé au niveau des sorties d'air.

On a constaté que l'utilisation d'un tel ventilateur radial permettait une circulation axiale de l'air de refroidissement au travers des bobinages du moteur électrique, et une évacuation radiale de l'air chaud au travers des sorties d'air, mais que le débit d'air ainsi obtenu au travers du moteur était relativement faible.

Du fait des performances limitées de tels dispositifs de ventilation, les appareils existants ne peuvent être utilisés à des puissances élevées sans échauffements prohibitifs.

L'invention a pour but de remédier à cet inconvénient, et d'augmenter la puissance maximale pouvant être atteinte par le moteur, et maintenue, dans des conditions normales d'utilisation.

A cet effet, l'invention a pour objet un appareil du type précité, dans lequel le dispositif de ventilation comporte en outre un ventilateur axial solidaire de l'arbre, agencé coaxialement en amont du ventilateur radial.

Suivant d'autres caractéristiques, optionnelles, de l'appareil selon l'invention :
- le ventilateur axial est agencé en aval du stator ;
- le dispositif de ventilation est prévu pour faire circuler de l'air dans le moteur, entre le stator et le rotor ;
- le dispositif de ventilation comprend une paroi radiale agencée entre le stator et le carter, de façon à forcer la circulation d'air à partir de l'entrée d'air, entre le stator et le rotor ;
- l'entrée d'air est agencée radialement en amont du stator ; et
- le dispositif de ventilation comprend un conduit d'air axial, agencé axialement entre le stator et le ventilateur axial.

Un mode particulier de réalisation de l'invention va maintenant être décrit plus en détail en référence aux dessins annexés, sur lesquels :
- la Figure 1 et une vue en perspective, coupée dans un plan longitudinal, d'un appareil conforme à l'invention ;
- la Figure 2 et une vue partielle, à plus grande échelle, de l'appareil de la Figure 1, en coupe dans le plan 2-2 ;
- la Figure 3 est une vue analogue à la Figure 2, dans le plan 3-3 indiqué sur la Figure 1; et
- la Figure 4 est un schéma représentant le dispositif de commande et de contrôle du moteur de l'appareil représenté sur les Figures précédentes.

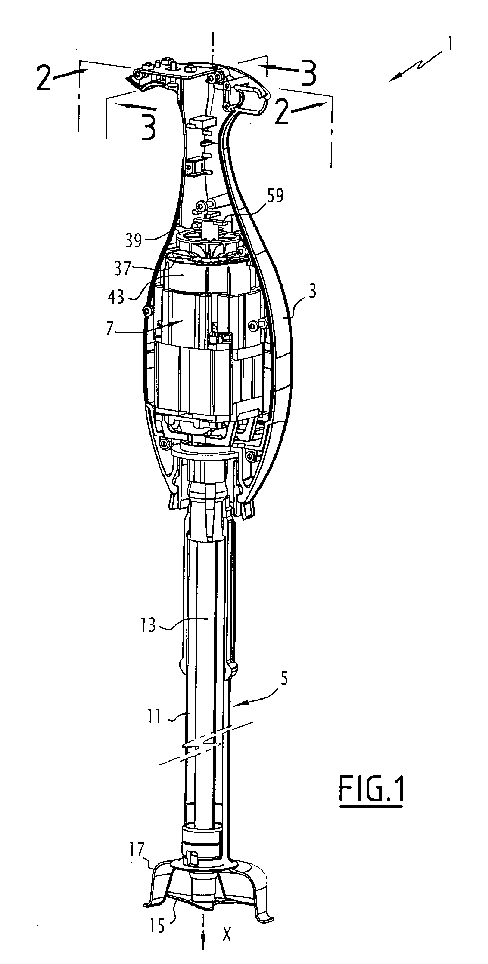

Sur les Figures 1 à 3, on a représenté un appareil 1 conforme à l'invention, du type communément appelé « mixeur ».

Ce mixeur comprend un carter 3 formant poignée, un outil 5 de traitement de produits alimentaires, et un moteur électrique 7, logé dans le carter 3.

L'outil 5 comprend un tube-enveloppe 11 fixé de façon détachable au carter 3 à l'une de ses extrémités, un arbre d'entraînement 13 monté rotatif coaxialement dans le tube 11, et un organe 15 de traitement de produits, tel qu'une lame ou un couteau, solidaire de l'arbre 13. L'organe 15 de traitement des produits fait saillie du tube 11, du côté de l'extrémité libre de ce dernier.

L'outil 5 comporte en outre une cloche 17, solidaire du tube 11 à l'extrémité libre de ce dernier, et prévue pour protéger l'accès à l'organe 15.

Le moteur 7 est relié à l'arbre 13 de façon à pouvoir entraîner en rotation l'organe de traitement 15.

Dans la position d'utilisation de l'appareil 1, telle que représentée sur la Figure 1, l'axe X commun à l'arbre 13 et au tube 11, qui représente également l'axe de rotation de l'organe de traitement 15, est généralement orienté verticalement, l'organe de traitement 1 étant tourné vers le bas.

Dans toute la description qui va suivre, l'appareil 1 sera supposé orienté de cette façon.

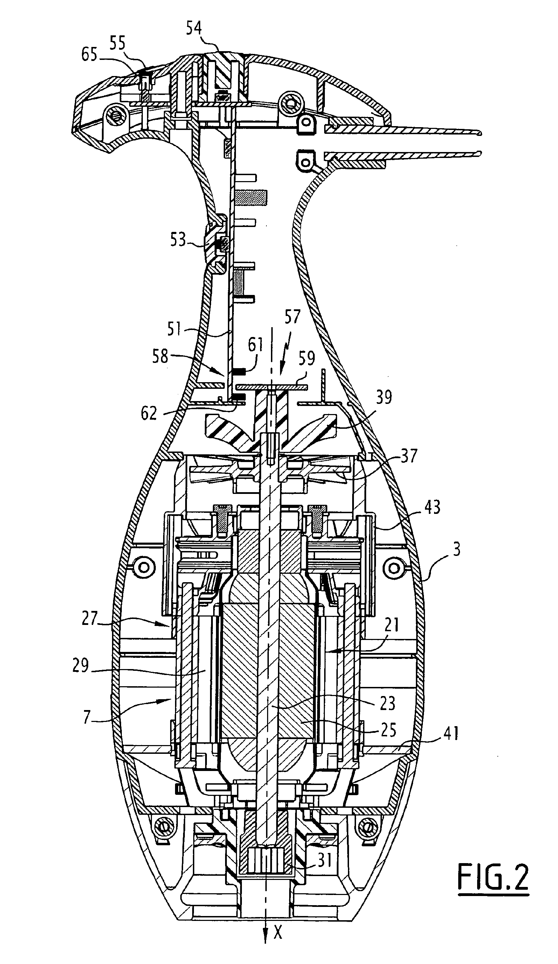

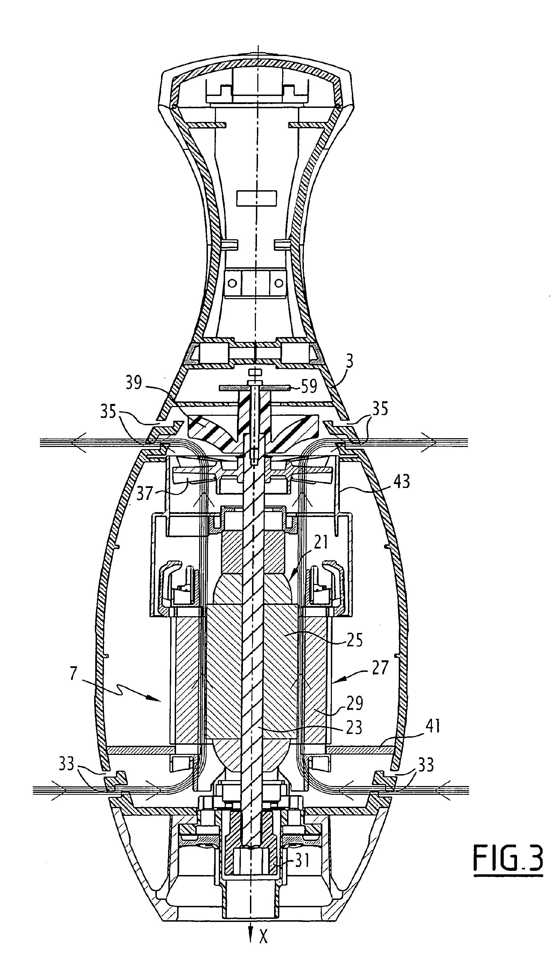

On notera que sur les Figures 2 et 3, auxquelles on se réfère à présent plus particulièrement, l'outil 5 n'a pas été représenté, et ce dans un souci de simplification.

Le moteur 7 est de préférence un moteur de type universel, ayant au rotor 21 un arbre-moteur (ou arbre de sortie moteur) 23, orienté axialement, et un bobinage solidaire 25. Le stator 27 du moteur 7 comprend un bobinage 29 s'étendant radialement à l'extérieur du bobinage rotorique 25.

A son extrémité inférieure, l'arbre-moteur 23 est solidaire d'une pièce d'accouplement 31 dotée d'une forme d'entraînement, prévue pour recevoir une forme d'entraînement complémentaire de l'arbre 13 de l'outil 5, de sorte à former une liaison en rotation détachable entre l'arbre 13 et l'arbre-moteur 23.

L'appareil 1 comporte en outre un dispositif de ventilation prévu pour refroidir le moteur lors du fonctionnement de l'appareil.

Ce dispositif comprend, dans une partie inférieure du carter, des orifices 33 d'entrée d'air agencés de façon périphérique, radialement à l'extérieur par rapport à l'arbre 23.

De façon correspondante, le dispositif de ventilation comporte, dans une partie du carter 3 située plus vers le haut, des orifices 35 de sortie d'air, agencés de façon périphérique, radialement à l'extérieur par rapport à l'arbre 23.

Le bobinage rotorique 25 et le bobinage statorique 29 s'étendent axialement entre les entrées d'air 33 et les sorties d'air 35.

Le dispositif de ventilation comprend d'autre part un ventilateur axial 37 et un ventilateur radial 39 solidaires de l'arbre 23, et agencés du côté de l'extrémité supérieure de ce dernier. Le ventilateur radial 39 est agencé sensiblement au niveau axial des sorties d'air 35, tandis que le ventilateur axial 37 est agencé immédiatement en amont, en considérant le sens d'écoulement d'air des entrées d'air 33 vers les sorties d'air 35.

En d'autres termes, le ventilateur axial 37 est situé au-dessous du ventilateur radial, plus précisément entre ce dernier et les bobinages rotorique 25 et statorique 29.

Le ventilateur axial 37, lors de sa rotation, contribue à une circulation d'air dans une direction générale axiale, les filets d'air s'écoulant de façon hélicoïdale autour de l'axe X.

Le ventilateur radial 39, lors de sa rotation, reçoit en entrée ce flux d'air généralement axial issu du ventilateur axial, et le dirige de façon essentiellement radiale, en direction des orifices 35 de sortie d'air.

Le trajet des filets d'air de refroidissement, mis en mouvement par la rotation des ventilateurs 37, 39, est représenté schématiquement sur la Figure 3.

Il est visible sur cette Figure que l'air de refroidissement circule de façon essentiellement radiale des entrées d'air 33 en direction de l'arbre 23, puis circule essentiellement axialement à l'intérieur du moteur 7, en passant entre les bobinages statorique 29 et rotorique 25. L'air circule ensuite au travers du ventilateur axial 37, puis est diffusé radialement depuis l'axe vers les sorties d'air périphériques 35 par le ventilateur radial 39.

On notera qu'une paroi annulaire 41 du dispositif de ventilation est fixée à l'intérieur du carter 3, de façon à s'étendre radialement entre le stator 27 et le carter 3. Cette paroi 41 empêche la circulation de l'air, depuis les entrées d'air 33, entre le stator 27 et la partie correspondante du carter entourant ce dernier. La paroi 41 force ainsi la circulation d'air, à partir des entrées d'air 33, entre le rotor 21 et le stator 27.

On notera également que le dispositif de ventilation comprend, s'étendant axialement entre le stator 27 et le ventilateur axial 37, un conduit tubulaire axial 43 permettant de canaliser l'air axialement entre le stator et le ventilateur 37, sensiblement jusqu'au niveau des sorties d'air 35, pour éviter de la recirculation d'air à l'intérieur du carter vers les entrées 33 (vers le bas).

On a constaté que l'association du ventilateur axial 37 et du ventilateur radial 39 augmentait sensiblement l'efficacité du dispositif de ventilation à vitesse de rotation d'arbre constante, en augmentant sensiblement le débit d'air traversant les zones privilégiées d'échauffement, situées au niveau des bobinages 25, 29.

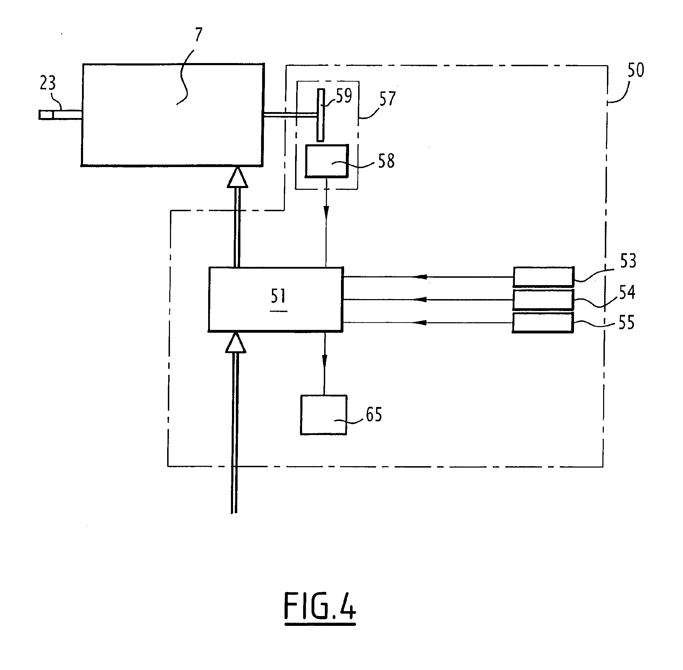

L'appareil 1 comporte en outre un dispositif 50 de contrôle et de commande du moteur 7, dispositif qui a été schématisé sur la Figure 4.

Pour la description qui va suivre de ce dispositif de contrôle et de commande 50, on se reportera plus particulièrement aux Figures 2 et 4.

Le dispositif de contrôle et de commande 50 comprend un organe électronique 51 de commande du moteur, adapté pour piloter l'alimentation électrique de ce dernier. L'organe de commande 51 est réalisé sous la forme d'une carte électronique à circuit imprimé, agencée et fixée à l'intérieur du carter 3.

Le dispositif de contrôle et de commande 50 comprend en outre, agencés dans une partie supérieure du carter et actionnable par l'utilisateur, un bouton 53 de mise en marche, un bouton 54 d'arrêt du moteur, et des boutons 55 de réglage de la vitesse de consigne du moteur. Ces boutons 53, 54, 55 sont reliés électriquement à l'organe de commande 51, de sorte que ce dernier reçoit des signaux d'entrée respectifs représentatifs de leur état.

Le dispositif de contrôle et de commande 50 est pourvu en outre d'un dispositif 57 de mesure sans contact de la vitesse de rotation de l'arbre-moteur 23, ce dispositif 57 étant de type magnétique. Il comporte plus précisément un capteur à effet Hall 58 fixe par rapport au carter 3, et un organe de codage 59 associé, solidaire en rotation de l'arbre-moteur 23.

L'organe de codage 59 est par exemple un barreau de matériau magnétique ou magnétisable, par exemple un barreau de fer doux, apte à dévier les lignes de champ magnétique d'un aimant placé à proximité. Dans l'exemple représenté, l'organe de codage 59 est fixé à l'extrémité supérieure du ventilateur radial 39.

De façon classique, le capteur à effet Hall 58 comprend un organe source 61, tel qu'un aimant permanent, produisant un champ magnétique, et un organe 62 sensible au champ magnétique de l'organe source 61. L'organe sensible 62, qui est alimenté électriquement, est le siège d'une tension de Hall qui est mesurée. Cette mesure est transmise à l'organe de commande 51, auquel le capteur 58 est relié.

L'aimant 61 et l'organe sensible 62, qui sont par exemple fixés sur la carte de circuit imprimé 51, sont espacés l'un de l'autre, de façon que l'organe de codage 59, lors de sa rotation solidaire avec l'arbre-moteur 23, passe entre l'aimant 61 et l'organe sensible 62. En l'occurrence, seules les deux parties d'extrémité du barreau formant organe de codage 59 passent alternativement entre l'aimant 61 et l'organe sensible 62.

Ainsi, lors de sa rotation, l'organe de codage 59 influence le capteur 58 en faisant varier la tension de Hall dans l'organe sensible 62.

On comprend que l'analyse des variations de la tension de Hall dans l'organe sensible 62 permet d'accéder à la valeur de vitesse réelle de l'arbre-moteur 23.

L'organe de commande 51 est adapté, lors du fonctionnement du moteur, pour recevoir la valeur de consigne de vitesse de l'organe de réglage 55, ainsi que la valeur de vitesse mesurée du capteur 58, et pour réguler la vitesse de rotation du moteur sur la vitesse de consigne, en utilisant la vitesse mesurée comme variable de contrôle.

Le dispositif de contrôle et de commande 50 comporte en outre un témoin de surcharge 65, par exemple un témoin lumineux, comme cela est représenté sur la Figure 2, relié électriquement à l'organe de commande 51.

L'organe de commande 51 est adapté pour calculer l'écart entre la valeur de consigne et la valeur mesurée de la vitesse de rotation de l'arbre-moteur 23, reçues respectivement de l'organe de réglage 55 et du capteur 58. L'organe de commande 51 active le témoin de surcharge 65, en l'occurrence déclenche l'émission d'un signal lumineux, lorsque l'écart entre la valeur de consigne et la valeur mesurée de la vitesse dépasse une valeur de seuil prédéterminée, et ce pendant une première durée prédéterminée.

Par exemple, le témoin de surcharge 65 pourra être activé lorsque la vitesse mesurée reste inférieure de 10 à 20% (de préférence 15%) à la valeur de consigne, pendant 1 minute ou plus.

De façon optionnelle, l'organe de commande 51 peut être adapté pour couper l'alimentation du moteur 7 lorsque l'écart entre la vitesse de consigne et la vitesse mesurée dépasse cette même valeur de seuil (par exemple de 10 à 20%, et de préférence 15%) pendant une deuxième durée prédéterminée, supérieure à la première.

La deuxième durée prédéterminée peut par exemple être de l'ordre de 1 minute 30, ou 2 minutes.

Grâce à cette disposition, l'utilisateur peut être averti d'un risque de surchauffe du moteur, et l'arrêt du moteur peut être déclenché automatiquement lorsque ces risques de surchauffe deviennent critiques.

## Revendications

1. Appareil électrique de traitement de produits alimentaires, comportant
- un carter (3),
- un moteur électrique (7) agencé dans le carter (3), ayant un stator (27) et un rotor (21), doté d'un arbre d'entraînement (23) et prévu pour entraîner un organe (15) de traitement de produits,
- un dispositif de ventilation prévu pour refroidir le moteur (7) lors de son fonctionnement, ledit dispositif comportant au moins une entrée (33) et une sortie (35) d'air dans le carter (3), ladite sortie d'air (35) étant agencée radialement par rapport à l'arbre (23), un ventilateur radial (39) solidaire de l'arbre (23), agencé pour faire circuler de l'air de l'entrée (33) vers la sortie (35) d'air au travers du moteur (7),
**caractérisé en ce que** ledit dispositif de ventilation comporte en outre un ventilateur axial (37) solidaire de l'arbre (23), agencé coaxialement en amont du ventilateur radial (39).

2. Appareil selon la revendication 1, **caractérisé en ce que** le ventilateur axial (37) est agencé en aval du stator (27).

3. Appareil selon la revendication 1 ou 2, **caractérisé en ce que** le dispositif de ventilation est prévu pour faire circuler de l'air dans le moteur (7), entre le stator (27) et le rotor (21).

4. Appareil selon la revendication 3, **caractérisé en ce que** le dispositif de ventilation comprend une paroi radiale (41) agencée entre le stator (27) et le carter (3), de façon à forcer la circulation d'air à partir de l'entrée d'air (33), entre le stator (27) et le rotor (21).

5. Appareil selon l'une quelconque des revendications 1 à 4, **caractérisé en ce que** l'entrée d'air (33) est agencée radialement en amont du stator (27).

6. Appareil selon l'une quelconque des revendications 1 à 5, **caractérisé en ce que** le dispositif de ventilation comprend un conduit d'air axial (43), agencé axialement entre le stator (27) et le ventilateur axial (37).
